# EUROPÄISCHE PATENTSCHRIFT

(11) **EP 1 026 046 B1**
(45) Veröffentlichungstag und Bekanntmachung des Hinweises auf die Patenterteilung: **29.09.2004**
(21) Anmeldenummer: 00100940.6
(22) Anmeldetag: 19.01.2000
(51) Int. Cl.: B60R 19/56, B60R 19/42

(54) **Versperrvorrichtung für eine wenigstens eine Planke aufweisende Klappe eines Nutzfahrzeuges**
Locking device for a truck swing-down movable element comprising at least one plank
Dispositif de blocage d'un élément rabattable à une planche au moins, pour camion

(30) Priorität: 03.02.1999 DE 19904386
(43) Veröffentlichungstag der Anmeldung: 09.08.2000
(73) Patentinhaber: MAN Nutzfahrzeuge Aktiengesellschaft, 80976 München (DE)
(72) Erfinder: Beck, Klaus, Dipl.-Ing., 82216 Gernlinden (DE)

(56) Entgegenhaltungen:
- DE-A- 4 143 294
- DE-A- 4 314 415
- DE-A- 4 324 803
- DE-U- 9 316 781

## Beschreibung

Die Erfindung betrifft eine Vorrichtung zum Versperren einer im wesentlichen vertikalen Öffnung in einem Seitenbereich eines Nutzfahrzeuges gemäß dem Oberbegriff des Anspruches 1.

Aus der DE 43 24 803 A1 ist eine Unterfahrschutz-Vorrichtung für Lastkraftwagen, Anhänger und Sattelhänger entsprechend dem Oberbegriff des Anspruch 1 bekannt, die ein aus Vertikalprofilen und Horizontalprofilen bestehendes Schutzelement aufweist. Das Schutzelement ist über seine Vertialprofile lösbar an fahrzeugfesten Halteprofilen festgelegt. Dabei stützt sich jedes Vertikalprofil mit seinem unteren Ende auf einem unten am Halteprofil angeordneten Trageelement ab. Zudem ist das Vertikalprofil an seinem oberen Ende mittels einer Zugfeder mit dem fahrzeugfesten Halteprofil verspannt und mit einem Bolzen in einem vertikalen Langloch des Halteprofils vertikal verschiebbar geführt und schwenkbar.

Aus der DE 93 16 781 U1 ist ein seitlicher Unterfahrschutz für Lkw und Anhänger bekannt, bei dem seitliche Klappen mittels stationär auf Haltestreben angeordneten Achsen schwenkbar gelagert und in der an- und abgeschwenkten Stellung mittels einer Steckers fixierbar sind. Zum Freigeben des durch den seitlichen Unterfahrschutz versperrten Raumes werden die Klappen hochgeschwenkt. Unter ungünstigen Umständen können sich die lediglich schwenkbaren Klappen als Hindernis erweisen, wodurch die Zugänglichkeit zu dem hinter ihnen befindlichen Stauraum beeinträchtigt werden kann.

Hiervon ausgehend ist es daher Aufgabe der Erfindung, eine Vorrichtung der eingangs erwähnten Art zu schaffen, die mit einfachen und kostengünstigen Mitteln eine gute Zugänglichkeit des von der Vorrichtung versperrten Bereiches ermöglicht.

Diese Aufgabe wird erfindungsgemäß durch die Merkmale des Anspruches 1 gelöst.

Durch die erfindungsgemäße Lösung ist eine Vorrichtung zum Versperren einer im wesentlichen vertikalen Öffnung in einem Seitenbereich eines Nutzfahrzeuges gegeben. Die Vorrichtung ist mit wenigstens einer, wenigstens eine Planke aufweisenden Klappe und mit wenigstens einer rahmenfest anordbaren, vertikalen Haltestrebe, auf der die Klappe aufnehmbar ist, ausgestattet. Hierbei ist die wenigstens eine Klappe zwecks ihrer Öffnung aus ihrer Verstaulage von der Haltestrebe um eine Horizontalachse abschwenkbar, wobei die Klappe unter einem definierten Schwenkwinkel mit einem, mit der Klappe verbundenen Führungskopf längs der Haltestrebe in einem an diesem gegebenen Führungskanal vertikal beliebig verschiebbar ist, und wobei in jeder beliebigen vertikalen Verschiebeposition der Klappe bei Unterschreiten des definierten Schwenkwinkels zwischen Klappe und Haltestrebe unter Einfluß der auf die Klappe wirkenden Schwerkraft eine Verkantung des Führungskopfes im Führungskanal und dadurch eine reibschlüssige Fixierung der geöffneten Klappe an der Haltestrebe in vertikaler Richtung gegeben ist. Somit ist in vorteilhafter Weise mit einfachen Mitteln eine öffnungsfähige Klappe geschaffen, die eine optimale Zugänglichkeit zu dem durch diese verschließbaren Raum gewährleistet.

Gemäß einer weiteren Ausgestaltung der Erfindung kann die vertikale Haltestrebe als Führungsschiene ausgebildet sein, die klappenseitig einen vertikalen Schlitz und dahinter den gegenüber dem Schlitz seitlich erweiterten, vertikalen Führungskanal aufweist, der pro jeweils zugeordeter Klappe mit einer Ausfahröffnung versehen ist, der eine den Schlitz zumindest teilweise überquerende Traverse benachbart ist. Des weiteren kann jede Klappe pro Haltestrebe einerseits eine mit der Haltestrebe zum Eingriff bringbare Verriegelungseinrichtung aufweisen und andererseits einen im montierten Fall im Führungskanal geführten Führungskopf aufweisen, wobei der Führungskopf von einem im montierten Fall den Schlitz in dem Führungskanal durchgreifenden Hals absteht und mit seinem halsfernen Ende zur Klappe hin geneigt ist und im demontierten Fall der Führungskopf bei der von der Haltestrebe abgeschwenkten Klappe in den Führungskanal einführbar ist, und wobei der Führungskopf im montierten Fall innerhalb des Führungskanals vertikal verschiebbar und gegenüber diesem unter Ausnutzung der Schwerkraft arretierend verkantbar ist und wobei im montierten Fall der Führungskopf beim in Verstauungsposition bringenden Anschwenken der Klappe an die Haltestrebe über die jeweils zugeordnete Ausfahröffnung teilweise aus dem Führungskanal ausfahrbar und an der der Ausfahröffnung benachbarten Traverse einhängbar ist.

Die bei an die Haltestebe angeschwenkter Klappe sich ergebene Einhängung des Führungskopfes an der zugeordneten Traverse führt in vorteilhafter Weise zu einer formschlüssigen Abstützung der Klappe an der Haltestrebe. Es ergibt sich somit eine definierte, unverrückbare Sperrstellung der Klappe, welche sich durch Unterschreitung des definierten Schwenkwinkels ergibt. Die Sperrstellung der Klappe bleibt auch erhalten, wenn auf die Klappe größere Kräfte wirken. Es ist daher ohne weiteres möglich, die Klappe als Aufstiegshilfe zu benutzen. Gleichzeitig gewährleistet der genannte Formschluß von Führungskopf und Traverse auch eine hohe Festigkeit. Bei von der Haltestrebe abgeschwenkter Klappe wirkt der Führungskopf praktisch als Gleitschuh, der innerhalb des Führungskanals verschiebbar ist. Die abgeschwenkte Klappe kann daher in vorteilhafter Weise in jede gewünschte Position gebracht und dementsprechend aus jeder hinderlichen Position entfernt werden. Dies gewährleistet eine hohe Bedienungsfreundlichkeit und einen hohen Arbeitskomfort bezüglich des Zugangs zu einem hinter der Klappe sich befindenden Aggregat. Ein weiterer Vorteil ist darin zu sehen, dass die Klappe zum Öffnen nur leicht abgeschwenkt werden muß, so dass nur ein geringer Schwenkraum benötigt wird, was sich ebenfalls vorteilhaft auf die Bedienungsfreundlichkeit auswirkt. Beim Loslassen der abgeschwenkten Klappe sorgt die Schwerkraft in vorteilhafter Weise für eine Verkantung des Führugnskopfes im Führungskanal, wodurch sich ein reibschlüssiger Halt ergibt. Zusätzliche Mittel zum Halten der abgeschwenkten Klappe sind daher in vorteilhafter Weise nicht erforderlich.

Mit den erfindungsgemäßen Maßnahmen wird die eingangs erwähnte Aufgabe daher auf höchst einfache und kostengünstige Weise gelöst.

Vorteilhafte Ausgestaltungen und zweckmäßige Fortbildungen der übergeordneten Maßnahmen sind in den Unteransprüchen angegeben. So kann die der Klappe zugewandte Unterseite des zweckmäßig klotzförmigen Führungskopfes konkav ausgebildet sein. Dies ergibt einen besonders zuverlässigen Formschluß sowie einen schonenden, gegenseitigen Eingriff von Führungskopf und Traverse.

Die Führungsschiene kann einfach als U-Profilabschnitt mit nach innen abgewinkelten Schenkelenden ausgebildet sein. Dies ergibt eine besonders kostengünstige Herstellung.

Zweckmäßig kann die Ausfahröffnung einfach als offenes Ende der Führungsschiene ausgebildet sein, was sich ebenfalls vorteilhaft auf die Vermeidung von Bauaufwand auswirkt. Eine besonders zu bevorzugende Ausführung kann dabei darin bestehen, daß die Führungsschiene an ihren beiden Enden offen und mit einer den Schlitz überquerenden Traverse versehen ist. Hierbei können daher jeder Führungsschiene zwei übereinander angeordnete Klappen zugeordnet sein, wobei der der oberen Klappe zugeordnete Führungskopf im Bereich des oberen Klappenrandes und der der unteren Klappe zugeordnete Führungskopf im Bereich des unteren Klappenrandes angeordnet ist, so daß die beiden Klappen gegensinnig geschwenkt werden können.

Zweckmäßig kann dabei jeder Klappe eine Planke zugeordnet sein. Hierdurch ergibt sich eine vergleichsweise geringe Klappenbreite, was sich vorteilhaft auf den benötigten Schwenkraum auswirkt.

Vorteilhaft kann der den Führungskopf tragende Hals von einem Tragstück abstehen, an dem jede Planke der zugeordneten Klappe festlegbar ist.

Das Tragstück samt Führungskopf kann dabei als einteiliger Gußformling hergestellt werden, was eine hohe Stabilität sowie einen einfachen Zusammenbau gewährleistet.

Die Verriegelungseinrichtung kann zweckmäßig als Vierteldrehsicherung ausgebildet sein, die einen durch eine 90°-Drehung in und außer Eingriff mit dem Führungskanal bringbaren Riegel aufweist. Hierbei handelt es sich um ein vielfach bewährtes, kostengünstiges Bauelement.

Weitere vorteilhafte Ausgestaltungen und zweckmäßige Fortbildungen der übergeordnete Maßnahmen sind in den restlichen Unteransprüchen angegeben und aus der nachstehenden Beispielbeschreibung anhand der Zeichnung näher entnehmbar.

In der nachstehend beschriebenen Zeichnung zeigen:
- Fig. 1: eine Seitenansicht eines erfindungsgemäßen Unterfahrschutzes,
- Fig. 2: ausschnittsweise eine Draufsicht auf die Anordnung gemäß Fig. 1,
- Fig. 3: in Vorderansicht ein Tragstück gemäß Fig. 1 und
- Fig. 4: in Seiteneinsicht ein Tragstück gemäß Fig. 1.

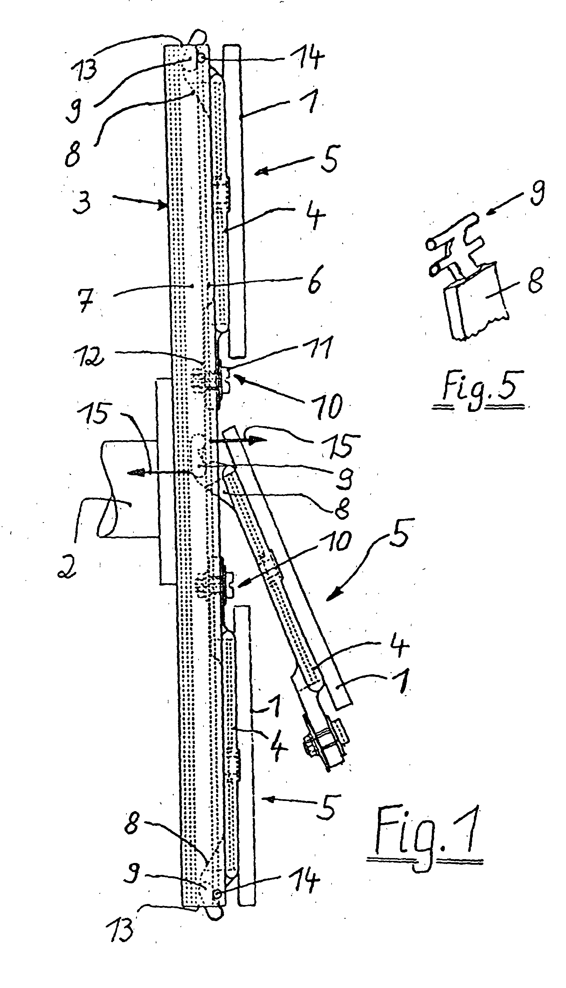

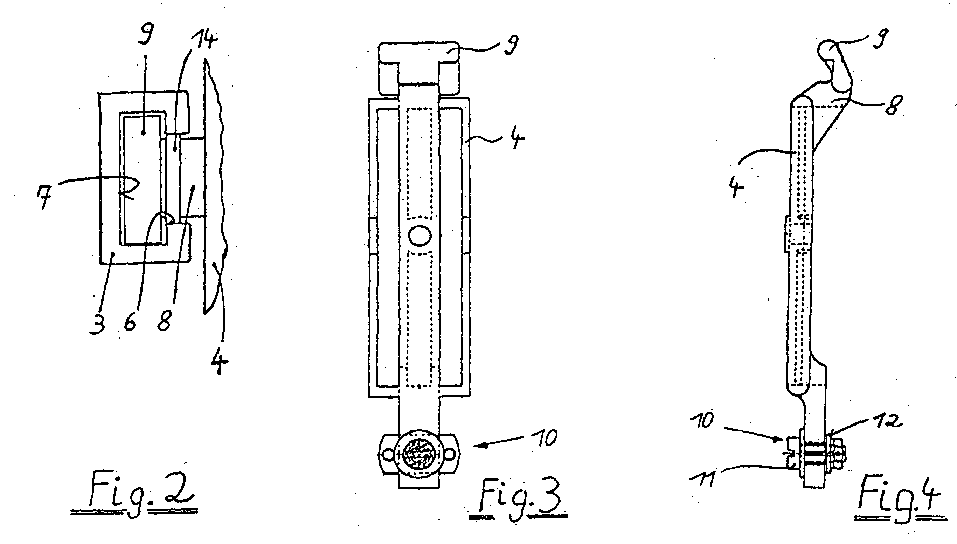

Bei Nutzfahrzeugen sind in der Regel die von der Ladebrücke und den Rädern begrenzten seitlichen Öffnungen durch einen jeweils zugeordneten Unterfahrschutz versperrt. Eine derartige Anordnung, die nach Art eines in einer vertikalen Ebene angeordneten Gatters ausgebildet ist, enthält, wie aus Fig. 1 entnehmbar ist, mehrere mit Abstand übereinander angeordnete Planken 1, die auf einer fahrzeugseitig angebrachten Aufnahmeeinrichtung aufgenommen sind. Diese enthält über die Bereichslänge verteilte, durch Tragrohre 2 mit dem Fahrzeugchassis verbundende Haltestreben 3. Bei kleinerer Bereichslänge genügt eine mittlere Haltestrebe.

Die Planken 1 sind einzeln an im Abstand der Haltestreben 3 angeordneten Tragstücken 4 befestigt, die gegenüber der jeweils zugeordneten Haltestrebe 3 schwenkbar und verschiebbar sind. Jede Planke 1 mit ihren Tragstücken 4 bildet praktisch eine Klappe 5, die an die Haltestreben 3 anschwenkbar und in dieser Position fixierbar ist, wie in Fig. 1 oben und unten angedeutet ist. Die Klappe 5 ist von der Haltestrebe 3 abschwenkbar und in dieser Position in Längsrichtung der Haltestrebe 3 verschiebbar, wie in Fig. 1 Mitte angedeutet ist.

Bei der der Fig. 1 zugrundeliegenden Anordnung sind über der Länge der Haltestreben 3 zwei übereinander angeordnete Planken 1 bzw. diese enthaltende Klappen 5 vorgesehen. Das sind die in Fig. 1 oben und unten dargestellten Planken 1 bzw. Klappen 5. In Fig. 1 Mitte ist lediglich die obere Klappe 5 in ihrer abgeschwenkten Stellung verdeutlicht. Im dargestellten Beispiel sind die Planken 1 an den Tragstücken 4 angebracht. Es wäre aber auch denkbar, diese in die Planken 1 zu integrieren.

Die Haltestreben 3 sind als Führungsschienen ausgebildet, die einen gegenüber einem klappenseitigen Schlitz 6 seitlich erweiterten Führungskanal 7 aufweisen. Hierzu kann einfach, wie aus Fig. 2 entnehmbar ist, eine U-Profilschiene mit nach innen abgewinkelten Schenkelenden Verwendung finden. Die Tragstücke 4 sind jeweils mit einem den Schlitz 6 der zugeordneten Haltestrebe 3 durchgreifenden Hals 8 versehen, der an seinem Ende einen im Führungskanal 7 aufnehmbaren Führungskopf 9 trägt. Die Dicke des klotzförmigen Führungskopfes 9 entspricht höchstens der lichten Weite des Führungskanals 7.

Im Bereich der oberen Klappe 5 geht der Hals 8 vom oberen Randbereich des zugehörigen Tragstückes 4 ab. Die Führungsköpfe 9 sind dementsprechend dem oberen Klappenrand zugeordnet. Im Bereich der unteren Klappe 5 ist dies genau umgekehrt. Im Bereich des den Führungsköpfen 9 jeweils gegenüberliegenden Klappenrandes sind die Klappen 5 mit mit den Haltestreben 3 in und außer Eingriff bringbaren Verriegelungseinrichtungen versehen. Hierzu sind die Tragstücke 4 der oberen Klappe 5 im Bereich des unteren Randes und die Tragstücke 4 der unteren Klappe 5 im Bereich des oberen Randes mit jeweils einer sogenannten Vierteldrehsicherung 10 versehen. Diese besitzt einen von vorne, das heißt plankenseitig zugänglichen Kopf 11, der mit einer Schraubendreherkerbe versehen ist und einen mit dem Kopf 11 verbundenen Riegel 12, der durch eine 90°-Drehung in und außer Eingriff mit dem Führungskanal 7 bringbar ist (Fig. 4).

Die den als Führungsschienen fungierenden Haltestreben 3 zugrundeliegenden Profilabschnitte sind stirnseitig, das heißt im Bereich ihrer Enden offen. Auf diese Weise ergeben sich stirnseitige Ausfahröffnungen 13, über die die Führungsköpfe 9 soweit aus dem Führungskanal 7 ausfahrbar sind, daß eine über das Laufspiel hinausgehende Kippung der klotzförmigen, im Führungskanal 7 verschiebbaren Führungsköpfe 9 möglich ist (Fig. 1, oben und unten). Anstelle einer stirnseitigen Ausfahröffnung 13 könnten selbstverständlich auch im Bereich der den Schlitz 6 flankierenden Leisten ausgestanzte Fenster vorgesehen sein. Jeder Ausfahröffnung 13 ist eine benachbarte, den Schlitz 6 überquerende Traverse 14 zugeordnet. Hierzu sind die Haltestreben 3 mit im Bereich ihrer Enden angeordneten, den Schlitz 6 überquerenden, durch eingeschweißte Rundstababschnitte gebildeten Traversen 14 vesehen.

Die Führungsköpfe 9, die eine praktisch rechteckige und damit eine dem lichten Querschnitt des Führungskanals 7 geometrisch ähnlich Umrißkontur besitzen, stehen vom jeweils zugeordneten Hals 8 in Richtung der zugeordneten Traverse 14 ab. Gleichzeitig verlaufen die Führungsköpfe 9 ausgehend vom zugeordneten Hals 8 zur zugeordneten Klappe 5 hin, das heißt, die Führungsköpfe 9 sind mit ihrem freien Ende zur zugeordneten Klappe 5 hin geneigt und verlaufen dementsprechend nicht parallel zur zugeordneten Klappenebene, sondern sind unter einem bestimmten Neigungswinkel hiergegen angestellt.

Um die Führungsköpfe 9 in den zugeordneten Führungskanal 7 einführen zu können, müssen die Führungsköpfe 7 in Kanalrichtung ausgerichtet sein. Hierzu wird die betreffende Klappe 5 (Fig. 1 Mitte) um den oben erwähnten Neigungswinkel von den Haltestreben 3 abgeschwenkt. Vorher wird die Vierteldrehsicherung 10 gelöst. In einer derartigen Ausrichtung können die Führungsköpfe 9 innerhalb des zugeordneten Führungskanals 7 und dementsprechend die zugehörige Klappe 5 entlang der Haltestreben 3 verschoben werden. Die auf die von den Haltestreben 3 abgeschwenkte Klappe 5 wirkende Schwerkraft bewirkt ein auf die zugehörigen Führungsköpfe 9 wirkendes, durch die Pfeile 15 angedeutetes Moment, das zu einer Verkantung der Führungsköpfe 9 im zugeordneten Führungskanal 7 führt und dementsprechend zu einer selbsttätigen, kraftschlüssigen Festlegung der Klappe 5 in jeder Position, in der die Klappe 5 losgelassen wird.

Zum Anlegen der Klappen 5 an die Haltestreben 3 werden die Klappen 5 in ihre Endstellung gebracht, die durch die jeweils zugeordneten Traversen 14 definiert ist. Um beispielsweise die in Fig. 1 Mitte gezeichnete, ausgeschwenkte Klappe 5 in die in Fig. 1 oben gezeigte Betriebsstellung zu bringen, wird diese Klappe 5 in der ausgeschwenkten Stellung solange angehoben, bis ihre Hälse 8 auf die oberen Traversen 14 der Haltestreben 3 auflaufen. In dieser Anschlagstellung kann die Klappe 5 an die Haltestreben 3 angelegt werden. Hierzu sind die als Endanschläge fungierenden Traversen so positioniert, daß die Führungsköpfe 9 in der Anschlagstellung über die jeweils zugeordnete Ausfahröffnung 13 soweit aus dem Führungskanal 7 herausgefahren sind, daß eine Schwenkbewegung ohne Verkantung möglich ist. Für die untere Klappe 5 gilt dasselbe in umgekehrter Richtung.

Die Führungsköpfe 9 bilden zusammen mit dem jeweils zugeordneten Hals 8 infolge des oben erwähnten Neigungswinkels praktisch ein Knie, das die zugeordnete Traverse 14 in der in Fig. 1 oben und unten angedeuteten Betriebsstellung teilweise umgreift, wodurch sich eine formschlüssige Einhängung der jeweiligen Klappe 5 an den Traversen 14 ergibt. Durch diese formschlüssige Einhängung sind die Klappen 5 in der an die Haltestreben 3 angeschwenkten Betriebsstellung gegen Verschieben in Führungslängsrichtung gesperrt. Durch Verriegelung mittels der Vierteldrehsicherung 10 erfolgt die Verhinderung einer unerwünschen Schwenkbewegung und damit eine Sicherung der Sperrung in Führungslängsrichtung.

Die Führungsköpfe 9 können eine klotz- bzw. plattenartige Konfiguration aufweisen. Es wäre aber auch denkbar, anstelle eines Führungskopfes 9 zwei voneinander beabstandete, parallele Führungsbolzen 16 vorzusehen (Fig. 5). Diese können durch einen mittleren Steg miteinander verbunden sein, der in den jeweils zugeordneten Hals 8 übergehen kann. In jedem Fall ist es zweckmäßig, wenn die Führungsköpfe 9 an ihren Enden abgerundet sind, so daß sich keine scharfen Kanten ergeben, die beim Verkanten zu einer Beschädigung der Laufflächen des Führungskanals 7 führen können.

Im dargestellten Beispiel ist die klappenseitige Unterseite der Führungsköpfe 9 konkav (Fig. 4). Dies ergibt eine zuverlässige Anlenkong an den Traversen 14. Zusätzlich können die Führungsköpfe 9 im Anlagebereich der Traversen 14 mit Kerben versehen sein, die eine verbesserte Anlage an die Traversen 14 ermöglichen. Die Traversen 14 können über die ganze Schlitzbreite durchgehend ausgebildet sein oder den zugeordneten Schlitz 6 nur teilweise überbrücken. Die Überbrückung ist dabei derart bemessen, daß das durch den Hals 8 und den Führungskopf 9 jeweils gebildete Knie in zuverlässige Anlage mit der Traverse 14 bringbar ist.

## Patentansprüche

1. Vorrichtung zum Versperren einer im wesentlichen vertikalen Öffnung in einem Seitenbereich eines Nutzfahrzeuges, mit wenigstens einer, wenigstens eine Planke (1) aufweisenden Klappe (5) und mit wenigstens einer rahmenfest anordbaren, vertikalen Haltestrebe (3), auf der die Klappe (5) aufnehmbar ist, wobei die wenigstens eine Klappe (5) zwecks ihrer Öffnung aus ihrer Verstaulage von der Haltestrebe (3) um eine Horizontalachse abschwenkbar ist, **dadurch gekennzeichnet, dass** die Klappe (5) unter einem definierten Schwenkwinkel mit einem, mit der Klappe (5) verbundenen, Führungskopf (9) längs der Haltestrebe (3) in einem an diesem gegebenen Führungskanal (7) vertikal beliebig verschiebbar ist, und wobei in jeder beliebigen vertikalen Verschiebeposition der Klappe (5) bei Unterschreiten des definierten Schwenkwinkels zwischen Klappe (5) und Haltestrebe (3) unter Einfluß der auf die Klappe (5) wirkenden Schwerkraft eine Verkantung des Führungskopfes (9) im Führungskanal (7) und dadurch eine reibschlüssige Fixierung der geöffneten Klappe (5) an der Haltestrebe (3) in vertikaler Richtung gegeben ist.

2. Vorrichtung nach Anspruch 1, **dadurch gekennzeichnet, dass** die vertikale Haltestrebe (3) als Führungsschiene ausgebildet ist, die klappenseitig einen vertikalen Schlitz (6) und dahinter den gegenüber dem Schlitz (6) seitlich erweiterten, vertikalen Führungskanal (7) aufweist, der pro jeweils zugeordneter Klappe (5) mit einer Ausfahröffnung (13) versehen ist, der eine den Schlitz (6) zumindest teilweise überquerende Traverse (14) benachbart ist, und dass jede Klappe (5) pro Haltestrebe (3) einerseits eine mit der Haltestrebe (3) zum Eingriff bringbare Verriegelungseinrichtung (10) aufweist und andererseits einen im montierten Fall im Führungskanal (7) geführten Führungskopf (9) aufweist, wobei der Führungskopf (9) von einem im montierten Fall den Schlitz (6) in dem Führungskanal (7) durchgreifenden Hals (8) absteht und mit seinem halsfernen Ende zur Klappe (5) hin geneigt ist und im demontierten Fall der Führungskopf (9) bei von der Haltestrebe (3) abgeschwenkter Klappe (5) in den Führungskanal einführbar ist, und wobei der Führungskopf (9) im montierten Fall innerhalb des Führungskanals (7) vertikal verschiebbar und gegenüber diesem unter Ausnutzung der Schwerkraft arretierend verkantbar ist und wobei im montierten Fall der Führungskopf (9) beim Anschwenken der Klappe (5) an die Haltestrebe (3) in ihrer Verstauposition über die jeweils zugeordnete Ausfahröffnung (13) teilweise aus dem Führungskanal (7) ausfahrbar und an der der Ausfahröffnung (13) benachbarten Traverse (14) einhängbar ist.

3. Vorrichtung nach einem der Ansprüche 1 und 2, **dadurch gekennzeichnet, dass** die der Klappe (5) zugewandte Seite des Führungskopfes (9) konkav ausgebildet ist und sich bereichsweise gegen die Traverse (14) abstützt.

4. Vorrichtung nach einem der vorhergehenden Ansprüche, **dadurch gekennzeichnet, daß** die als Führungsschiene ausgebildete Haltestrebe (3) als U-Profilabschnitt mit nach innen abgewinkelten Schenkelenden ausgebildet ist, und daß die Ausfahröffnung (13) als offenes Ende der als Führungsschiene ausgebildeten Haltestrebe (3) ausgebildet ist.

5. Vorrichtung nach einem der vorhergehenden Ansprüche, **dadurch gekennzeichnet, daß** die als Führungsschiene ausgebildete Haltestrebe (3) an ihren beiden Enden offen und mit einer den Schlitz (6) zumindest teilweise überbrückenden Traverse (14) versehen ist, und daß der Haltestrebe (3) zwei übereinander angeordnete Klappen (5) zugeordnet sind, wobei der der oberen Klappe (5) zugeordnete Führungskopf (9) im Bereich des oberen Klappenrandes und der der unteren Klappe (5) zugeordnete Führungskopf (9) im Bereich des unteren Klappenrandes angeordnet ist.

6. Vorrichtung nach einem der vorhergehenden Ansprüche, **dadurch gekennzeichnet, daß** der den Führungskopf (9) tragende Hals (8) von einem Tragstück (4) absteht, an dem jede Planke (1) der zugeordneten Klappe (5) festlegbar ist, und daß die der Ausfahröffnung (13) benachbarte Traverse (14) als Rundstababschnitt ausgebildet ist.

7. Vorrichtung nach einem der vorhergehenden Ansprüche, dadurch gekenntzeichnet, daß die Verriegelungseinrichtung (10) als sogenannte Vierteldrehsicherung ausgebildet ist, die einen durch eine 90°-Drehung in und außer Eingriff mit dem Führungskanal (7) bringbaren Riegel (12) aufweist, und daß die Verriegelungseinrichtung (10) plankenseitig einen mit einer Schraubendreherkerbe versehenen Kopf (11) aufweist.

## Claims

1. Device for locking an essentially vertical orifice in a lateral area of a commercial vehicle with at least one flap (5) having at least one plank (1) and with at least one vertical holding strut (3) which can be firmly fitted to the frame and on which the flap (5) can be supported, whereby for the purpose of opening it the at least one flap (5) can be slewed out of its storage position on the holding strut (3) about a horizontal axis, **characterised in that** the flap (5) with a guide head (9) connected with said flap (5) can, by a defined slewing angle, be infinitely moved in vertical direction along the holding strut (3) in a guide duct (7) provided on said guide head (9) and whereby in any vertical sliding position of the flap (5), when the slewing angle between the flap (5) and the holding strut (3) decreases below a defined value, the guide head (9) in the guide duct (7) is arrested and, consequently, the opened flap (5) is fixed in a friction-positive manner in vertical direction on the holding strut (3) under the influence of gravity acting on the flap (5).

2. Device according to Claim 1, **characterised in that** the vertical holding strut (3) is designed as a guide rail which on the side facing the flap has a vertical slit (6) and, behind it, the vertical guide duct (7) which is laterally expanded in respect of the slit (6), has an extension orifice (13) for each associated flap (5), which extension orifice (13) is adjoined by a traverse (14) which at least partially spans the slit (6) and that per holding strut (3) every flap (5) has on the one hand a locking device (10) which can be engaged with the holding strut (3) and, on the other hand, has a guide head (9) which, if fitted, is guided in the guide duct (7), whereby the guide head (9) projects from a neck (8) which, if fitted, reaches through the slit (6) in the guide duct (7), the end of the guide head (9) which faces away from the neck is inclined towards the flap (5) and, if removed, the guide head (9) can be inserted into the guide duct when the flap (5) is slewed away from the holding strut (3) and whereby the guide head (9), if fitted, can be vertically moved within the guide duct (7) and can be locked into place in an arresting manner relative to the guide duct (7) with the aid of gravity and whereby when the flap (5) is slewed towards the holding strut (3) in its storage position the guide head (9), if fitted, can be partially extended out of the guide duct (7) via the respectively associated extension orifice (13) and can be hooked into place on the traverse (14) adjoining the extension orifice (13).

3. Device according to one of the Claims 1 and 2, **characterised in that** the side of the guide head (9) which faces the flap (5) has a concave shape and is supported on the traverse (14) in some areas.

4. Device according to one of the aforegoing Claims, **characterised in that** the holding strut (3) designed as a guide rail is shaped as a U-section with inward-angled leg ends and that the extension orifice (13) is designed as an open end of the holding strut (3) designed as a guide rail.

5. Device according to one of the aforegoing Claims, **characterised in that** the two ends of the holding strut (3) designed as a guide rail are open and provided, at least in some areas, with a traverse (14) that at least partially. bridges the slit (6) and that the two flaps (5) arranged above each other are allocated to the holding strut (3), the guide head (9) allocated to the upper flap (5) being located in the area of the flap upper edge and the guide head (9) allocated to the lower flap (5) being located in the area of the flap lower edge.

6. Device according to one of the aforegoing Claims, **characterised in that** the neck (8) carrying the guide head (9) projects from a carrier (4) on which each plank (1) of the associated flap (5) can be firmly supported and that the traverse (14) adjoining the extension orifice (13) is designed as a round rod section.

7. Device according to one of the aforegoing Claims, **characterised in that** the locking device (10) is designed as a so-called quarter-turn lock which has a bolt (12) which can be engaged with and disengaged from the guide duct (7) by a 90° turn and that on the side facing the plank the locking device (10) has a head (11) with a screwdriver notch.

## Revendications

1. Dispositif de fermeture d'une ouverture principalement verticale se trouvant dans une partie latérale d'un véhicule industriel, comportant au moins une trappe (5) présentant elle-même au moins un bastaing (1) et au moins un montant d'arrêt (3) vertical pouvant être disposé de manière fixe sur un cadre et qui peut recevoir la trappe (5), auquel cas au moins une trappe (5) est rabattable à partir du montant d'arrêt (3) autour d'un axe horizontal pour s'ouvrir depuis sa position fermée, **caractérisé par le fait que** la trappe (5) peut être déplacée verticalement à volonté le long du montant d'arrêt (3) à un angle de pivotement défini avec une tête de guidage (9) reliée à la trappe (5) dans un conduit de guidage (7) et auquel cas, dans chaque position de déplacement verticale de la trappe (5), il sera possible d'emboîter la tête de guidage (9) dans le conduit de guidage (7) en fonction de la force de gravité exercée sur la trappe (5) en deçà d'un certain angle de pivotement défini entre la trappe (5) et le montant d'arrêt (3) et de garantir ainsi une fixation par frottement à la verticale de la trappe (5) ouverte sur le montant d'arrêt (3).

2. Dispositif selon la revendication 1, **caractérisé par le fait que** le montant d'arrêt (3) vertical est conçu comme rail de guidage présentant, côté abattant, une fente (6) verticale et, derrière, un conduit de guidage (7) vertical évasé latéralement vis-à-vis de la fente (6), lequel est muni d'un orifice de démontage (13) pour chaque trappe (5) respective et se trouve à proximité d'une traverse (14) traversant au moins partiellement la fente (6), et **par le fait que** chaque trappe (5) par montant d'arrêt (3) présente, d'un côté, un dispositif de verrouillage (10) pouvant être emboîté avec le montant d'arrêt (3) et, de l'autre côté, une tête de guidage (9) guidée dans le conduit de guidage (7) en état monté, auquel cas la tête de guidage (9) est éloignée d'un collet (8) traversant, en état monté, la fente (6) dans le conduit de guidage (7) et est inclinée avec son extrémité la plus éloignée au collet par rapport à la trappe (5) et, en état démonté, la tête de guidage (9) peut être introduite dans le conduit de guidage lorsque la trappe (5) se trouve en position rabattue par rapport au montant d'arrêt, et auquel cas la tête de guidage (9) peut être déplacée, en état monté, à la verticale dans le conduit de guidage (7) et peut être emboîtée de manière blocable vis-à-vis de celui-ci en utilisant la force de gravité, et auquel cas, en état monté, la tête de guidage (9) peut être sortie partiellement du conduit de guidage (7) en rabattant la trappe (5) sur le montant d'arrêt (3) dans sa position emmanchée par le biais de l'orifice de démontage (13) lui étant attribuée et peut être suspendue à la traverse (14) située à proximité de l'orifice de démontage (13).

3. Dispositif selon une des revendications 1 et 2, **caractérisé par le fait que** le côté de la tête de guidage tourné vers la trappe (5) est de forme concave et s'appuie en certains points sur la traverse (14).

4. Dispositif selon une des revendications mentionnées précédemment, **caractérisé par le fait que** le montant d'arrêt (3) conçu comme rail de guidage en forme de U est composé d'extrémités de montant recourbées vers l'intérieur et **par le fait que** l'orifice de démontage (13) est formé comme extrémité ouverte du montant d'arrêt (3) conçu comme rail de guidage.

5. Dispositif selon une des revendications mentionnées précédemment, **caractérisé par le fait que** le montant d'arrêt (3) conçu comme rail de guidage est ouvert à ses deux extrémités et est muni d'une traverse (14) surplombant au moins partiellement la fente (6), et **par le fait que** deux trappes (5) superposés sont attribués au montant d'arrêt (3), auquel cas la tête de guidage (9) attribuée à la trappe supérieure (5) est disposée dans la zone du bord supérieur de la trappe et que la tête de guidage (9) attribuée à la trappe inférieure (5) est disposée dans la zone du bord inférieur de la trappe.

6. Dispositif selon une des revendications mentionnées précédemment, **caractérisé par le fait que** le collet (8) portant la tête de guidage (9) est éloigné d'une pièce portante (4) à laquelle chaque bastaing (1) de la trappe attribuée (5) pourra être appliquée, et **par le fait que** la traverse (14) située à proximité de l'orifice de démontage (13) a la forme d'une barre ronde.

7. Dispositif selon une des revendications mentionnées précédemment, **caractérisé par le fait que** le dispositif de verrouillage (10) est conçu comme sécurité dite quart de tour qui présente un verrou (12) pouvant être enclenché ou désenclenché en lui faisant effectuer un tour à 90°, et **par le fait que** le dispositif de verrouillage (10) présente, côté bastaing, une tête munie d'une encoche de tournevis (11).
